(19) Europäisches Patentamt
European Patent Office
Office européen des brevets

(11) Veröffentlichungsnummer: **0 143 145**
**B1**

(12) # EUROPÄISCHE PATENTSCHRIFT

(45) Veröffentlichungstag der Patentschrift: **23.09.87**

(21) Anmeldenummer: **84103215.4**

(22) Anmeldetag: **23.03.84**

(51) Int. Cl.⁴: **B 65 G 1/02**, B 65 D 23/04, B 44 D 3/00

(54) **Regal zur Aufnahme von Lackdosen.**

(30) Priorität: **26.11.83 DE 8334015 U**
**26.11.83 DE 8334016 U**

(43) Veröffentlichungstag der Anmeldung: **05.06.85 Patentblatt 85/23**

(45) Bekanntmachung des Hinweises auf die Patenterteilung: **23.09.87 Patentblatt 87/39**

(84) Benannte Vertragsstaaten: **AT BE CH DE FR GB IT LI LU NL SE**

(56) Entgegenhaltungen:
**EP-A-0 065 498**
**GB-A-1 500 540**
**US-A-2 760 761**
**US-A-3 162 338**

(73) Patentinhaber: **Heinz Wulfert Maschinenbau GmbH & Co. KG, Hauptstrasse 1, D-5620 Velbert 11 - Langenberg (DE)**

(72) Erfinder: **Wulfert, Dieter, Looker Strasse 38, D-5620 Velbert 11 - Langenberg (DE)**

(74) Vertreter: **Weisse, Jürgen, Dipl.- Phys., Patentanwälte Dipl.- Phys. Jürgen Weisse Dipl.- Chem. Dr. Rudolf Wolgast Bökenbusch 41 Postfach 11 03 86, D-5620 Velbert 11 Langenberg (DE)**

EP 0 143 145 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Regal und Lackdosen zur Aufnahme in dem Regal.

Gemäß dem Oberbegriff des Anspruchs 1 besteht das Regal aus seitlichen vertikalen Trägern und zwischen den Trägern in unterschiedlichen vertikalen Abständen verlaufenden Tragplatten und aus einer Antriebseinrichtung mit einem Antriebsmotor und einer Antriebsübertragung an jeder Tragplatte zu einer Reihe von ersten Antriebsgliedern an einer Seite jeder Tragplatte, deren jedes zum Eingriff mit einem zweiten Antriebsglied an einer Lackdose ausgebildet ist, und Halterungen für jeweils eine Lackdose an den Tragplatten. Ein derartiges Regal ist aus der EP-A-0 065 498 bekannt.

Gemäß dem Oberbegriff des unabhängigen Anspruchs 10 enthält die Lackdose zur Aufnahme in dem Regal einen Deckel, in dem eine Rührerwelle gelagert ist, die auf der Innenseite des Deckels ein Rührwerk und auf der Außenseite des Deckels ein zweites Antriebsglied trägt. Der Deckel ist mit einem Verschlußglied für eine Ausgießöffnung und mit einem gegen die Kraft einer Feder im öffnenden Sinne betätigbaren Öffnungshebel für das Verschlußglied versehen, vgl. z. B. US-A-3 162 338.

Bei einem bekannten Regal dieser Art sind die Tragplatten aus Stahlblech und entsprechend den Abmessungen der verschiedenen Lackdosen in verschiedenen Abständen voneinander an den Trägern angeordnet. Die Antriebsübertragung erfolgt durch Keilriemen in den Tragplatten, durch die sich nach unten Antriebswellen erstrecken, an deren Enden erste Antriebsglieder in Form von Platten schwenkbar angeordnet sind, die sich zu gegenüberliegenden Seiten der Antriebswelle nach unten erstrecken. Die Antriebswellen und die ersten Antriebsglieder sind in einem Abstand voneinander angeordnet, der durch den Durchmesser der Lackdosen bestimmt ist, die auf der nächstunteren Tragplatte abgestellt werden. Jede Lackdose ist mit einem abnehmbaren Deckel abdichtend verschlossen, an dem eine Ausgießöffnung durch ein federbelastetes Verschlußglied verschließbar ist und in dem eine Rührerwelle drehbar gelagert ist. Am Außenende der Rührerwelle ist ein zweites Antriebsglied in Form einer an das erste Antriebsglied angepaßten Gabel mit hochstehenden Enden angeordnet. Bei Inbetriebnahme der Antriebseinrichtung greifen die Platten an den hochstehenden Enden der Gabel an und nehmen diese mit, so daß die Rührerwelle in Drehung versetzt wird. Diese Drehung ist erforderlich, um auch über längere Zeit die Homogenität des in der Dose enthaltenen Lacks sicherzustellen.

In der obengenannten EP-A-0 065 498 ist ein um eine Mittelachse drehbares Regal offenbart, bei dem an vertikalen Trägern einer zentralen Abstützung in unterschiedlichen vertikalen Abständen verlaufende Tragplatten angeordnet sind. Die Tragplatten mit Ausnahme der untersten Tragplatte tragen jeweils an ihrer Unterseite eine Reihe von Antriebsgliedern in Form von Spindeln, die antriebsmäßig miteinander und mit einer Antriebseinrichtung verbunden sind. Die Spindeln greifen an Rührern an, die in die einzelnen Lackdosen eingesetzt sind. Die Tragplatten sind jeweils an ihrer Oberseite mit einer Reihe von Halterungen in Form elastischer Klemmen zur Lokalisierung und Halterung der einzelnen Lackdosen versehen, die zu den Spindeln an der Unterseite der darüber liegenden Tragplatte ausgerichtet sind.

Bei dem bekannten Regal sind die Lackdosen auf den Tragplatten durch die Federklemmen nicht hinreichend gegen Kippmomente unter der Einwirkung des Rührantriebs gesichert. Außerdem sind die Antriebsglieder, welche die Antriebsverbindung zwischen dem Keilriemen in den Tragplatten und den Rührwerken im Inneren der Lackdosen bewirken, während des Betriebs frei zugänglich, was von erheblichem Nachteil für die Arbeitssicherheit dieser Regale ist.

Dementsprechend besteht die Aufgabe der Erfindung darin, ein Regal für Lackdosen und hierfür geeignete Lackdosen der eingangs genannten Art zu schaffen, das eine hohe Arbeits- und Betriebssicherheit bietet.

Erfindungsgemäß wird diese Aufgabe dadurch gelöst, daß die Halterungen an der Seite der Tragplatte, von der die ersten Antriebsglieder vorstehen, allgemein U-förmige Führungsgehäuse für jeweils eine Lackdose bilden, deren jedes das erste Antriebsglied umschließt, und daß das U-förmige Führungsgehäuse ein Rastelement enthält, das sich an einer von der Basis abgekehrten Seite zwischen den Seitenwänden des U-förmigen Führungsgehäuses erstreckt.

Der Einschluß der Antriebsglieder in das Führungsgehäuse macht die Antriebsverbindung und deren bewegliche Teile für Eingriffe von außen unzugänglich. Gleichzeitig wird durch das Führungsgehäuse in Verbindung mit dem Rastelement und einem Rastglied an der jeweiligen Lackdose der große Vorteil erreicht, daß die Lackdosen beim Einstellen in das Regal geführt werden und dadurch die Antriebsglieder der Antriebsverbindung stets einwandfrei zueinander ausgerichtet sind und in der Stellung festgehalten werden, in der sich die ersten und zweiten Antriebsglieder im Eingriff befinden.

Vorteilhafterweise erstreckt sich zwischen Seitenwänden des Führungsgehäuses eine dessen Basis gegenüberliegende Schutzwand, und das erste Antriebsglied ist zwischen der Basis und der Schutzwand eingeschlossen.

Hinsichtlich der Lackdose nach der Erfindung wird die vorgenannte Aufgabe dadurch gelöst, daß ein allgemein U-förmiges, von der Außenseite des Deckels aufragendes Führungsglied vorgesehen und an dem Öffnungshebel eine Rastvorrichtung angeordnet ist, und

daß die Basis des U-förmigen Führungsglieds an dem Deckel angeordnet ist und daß die Schenkel des U-förmigen Führungsglieds Führungselemente bilden, die zur Zusammenwirkung mit dem Führungsgehäuse bestimmt sind.

Vorzugsweise ist die Rastvorrichtung an der dem Deckel abgewandten Seite des Öffnungshebels angeordnet und kann ein von dem Öffnungshebel aufragendes Rastglied bilden, das mit dem Rastelement an dem Führungsgehäuse zusammenwirkt, um die Lackdose in ihrer zum Antrieb ausgerichteten Stellung zu sichern.

Durch eine solche Ausbildung der Lackdose wird eine flächenhafte und damit besonders wirksame Führung auch bei großvolumigen Lackdosen erreicht. Die bevorzugte Ausbildung des Rastgliedes am Öffnungshebel ermöglicht die Einrastung in der Betriebsstellung gegen die Feder des Öffnungshebels, so daß die Lackdose nur unter Betätigung des Öffnungshebels und damit nicht unbeabsichtigt aus ihrer Betriebsstellung entnommen werden kann.

Ein Ausführungsbeispiel der Erfindung ist in den Abbildungen dargestellt und wird nachfolgend anhand der Bezugszeichen im einzelnen erläutert und beschrieben. Es zeigen

Fig. 1 eine Vorderansicht des Regals nach der Erfindung mit einigen Lackdosen;

Fig. 2 eine Draufsicht auf ein Führungsgehäuse an der Unterseite der Tragplatte in dem Regal nach Fig. 1;

Fig. 3 eine Vorderansicht der Rasthalterung nach Fig. 2;

Fig. 4 eine Seitenansicht einer Lackdose mit Deckel in dem Regal nach Fig. 1; und

Fig. 5 eine Rückansicht der Lackdose mit Deckel nach Fig. 4.

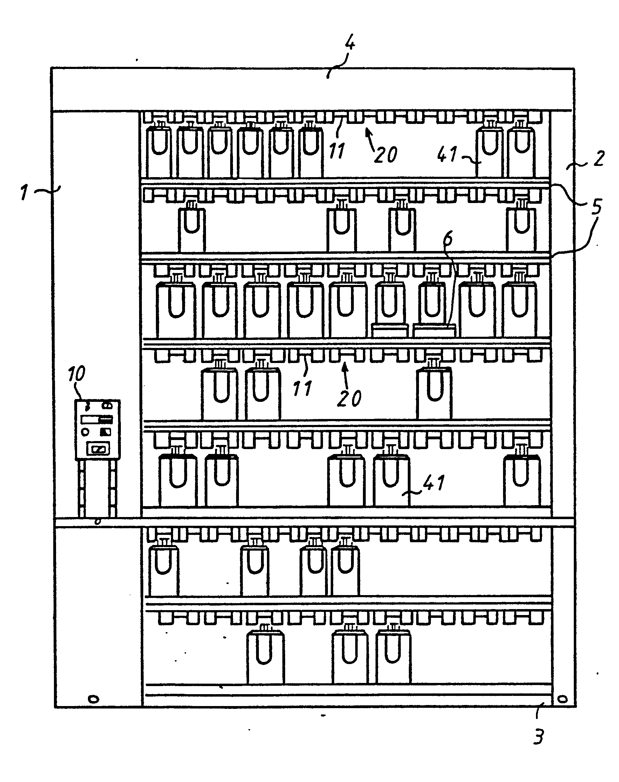

In der Vorderansicht des Regals nach Fig. 1 erkennt man seitliche Träger 1 und 2, die unten durch eine Bodenplatte 3 und oben durch einen Querträger 4 verbunden sind. Die Bodenplatte 3 kann sich gegebenenfalls auch noch weiter nach vorn erstrecken und die Träger 1, 2 können ggfs. mit entsprechend nach vorn vorstehenden Seitenteilen versehen sein; über diesem Teil der Bodenplatte kann ein Tisch errichtet werden. Der Querträger 4 kann mit einer Lampe zur Beleuchtung des Regals versehen werden. Die Träger 1 und 2, die Bodenplatte 3 und der Querträger 4 können aus jedem geeigneten Material bestehen und sind vorzugsweise aus Stahlblech gefertigt.

Zwischen den Trägern 1 und 2 erstrecken sich eine Reihe von Tragplatten 5, die vertikal in Abständen voneinander angeordnet sind, die durch die Höhe der jeweiligen Lackdosen 41 bestimmt sind. An der Unterseite der Tragplatten 5 befinden sich Führungsgehäuse 20, die in horizontalen Abständen voneinander angeordnet sind, die an die Durchmesser der jeweiligen Lackdosen 41 angepaßt sind. Auf diese Weise lassen sich auf den Tragplatten 5 des Regals Reihen von Lackdosen 41 verschiedener Größe stehend anordnen. In entsprechender Weise können auch unter dem ggfs. vorhandenen Tisch weitere Tragplatten zur Halterung von Lackdosen 41 angeordnet werden. In Fig. 1 erkennt man weiterhin an den Tragplatten 5 angeordnete Untersätze 6, die an den Tragplatten 5 verschiebbar angeordnet sind und ermöglichen, daß die jeweils kleineren Lackdosen 41 auf allen Tragplatten 5 angebracht werden können.

An dem Träger 1 ist ein Steuerkasten 10 für einen Hauptantriebsmotor in Gestalt eines Elektromotors befestigt; über die Höhe des Trägers 1 erstreckt sich eine Hauptantriebswelle, die mit dem Elektromotor in Antriebsverbindung steht. In Höhe der Tragplatten 5 sind an der Hauptantriebswelle Antriebsscheiben zur Antriebsübertragung auf erste Antriebsglieder 11 durch Keilriemen angeordnet.

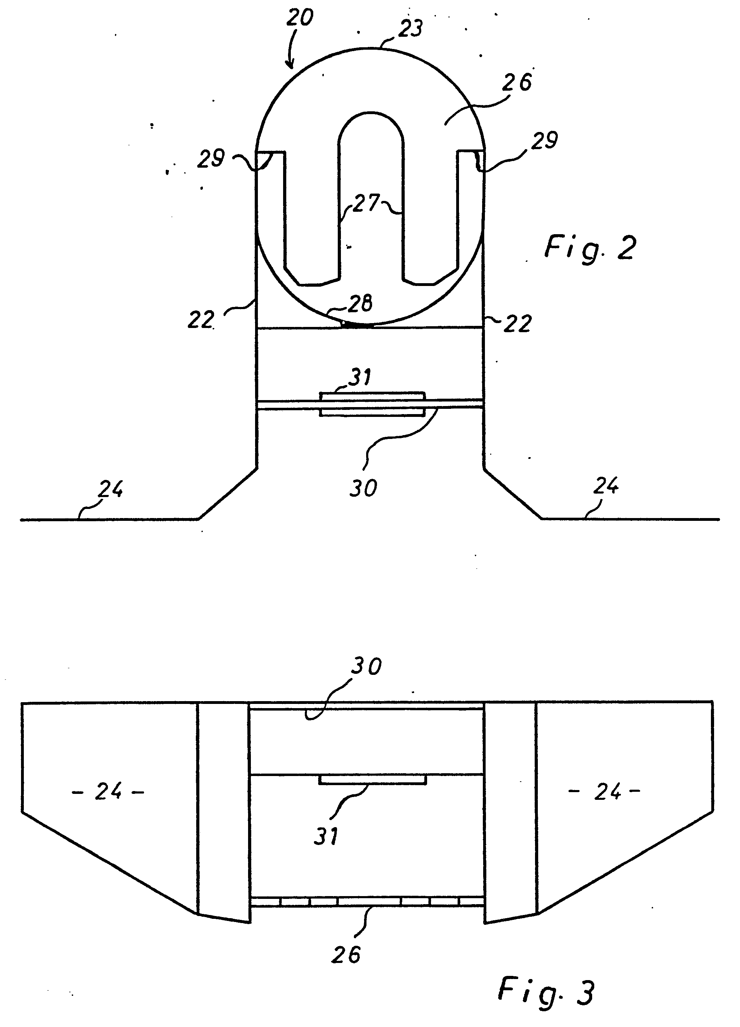

Die allgemein U-förmigen Führungsgehäuse 20 bestehen aus zwei Seitenwänden 22, die parallel zueinander und in einem Abstand voneinander so angeordnet sind, daß sie das erste Antriebsglied 11 zwischen sich einschließen. Die Seitenwände 22 sind durch eine halbkreisförmig ausgebildete Basis 23 verbunden. Von den freien Enden der Seitenwände 22 erstrecken sich seitlich abgewinkelte Einführungsglieder 24, die (vgl. Fig. 3) so weit nach unten verlaufen, daß sie eine Zwangsführung der Lackdosen 41 bewirken. Von der Basis 23 erstreckt sich eine Führungsplatte 26 mit einem Führungsschlitz 27. Dieser Führungsschlitz 27 ist so angeordnet und ausgebildet, daß er die von dem Deckel 40 einer Lackdose 41 vorstehende Rührerwelle 42 aufnimmt, wenn eine Lackdose 41 in das Führungsgehäuse 20 eingeschoben wird. An der der Basis 23 gegenüberliegenden Seite des ersten Antriebsglieds 11 verläuft zwischen den Seitenwänden 22 eine Schutzwand 28, so daß das erste Antriebsglied 11 zwischen der Basis 23 und der Schutzwand 28 eingeschlossen ist. Zwischen der Führungsplatte 26 und den Seitenwänden 22 des Führungsgehäuses 20 ist auf jeder Seite ein Schlitz mit einem Anschlag 29 ausgebildet, an dem das weiter unten beschriebene, an der Außenseite des Deckels der Lackdose befindliche Führungsglied anliegt, wenn die Lackdose ihre Betriebsstellung einnimmt.

Nahe den Einführungsgliedern 24 verläuft ein Befestigungsteil 30, das die Kanten der gegenüberliegenden Seitenwände 22 miteinander verbindet und zur Befestigung des U-förmigen Führungsgehäuses 20 an der Tragplatte 5 dient.

Ferner verläuft zwischen den Seitenwänden 22 des U-förmigen Führungsgehäuses 20 ein Rastelement 31 unterhalb des Befestigungsteils 30. Dieses Rastelement 31 kann einen zylindrischen Stab oder Stift bilden und so angeordnet und ausgebildet sein, daß es mit einem entsprechend am Deckel 40 einer Lackdose 41 ausgebildeten und angeordneten Rastglied zusammenwirkt, wie weiter unten beschrieben ist. Das Rastelement 31 kann auch mit einem nach einer Seite gerichteten Vorsprung versehen sein oder auch einen Anguß oder einen mit einer Mutter gesicherten Bolzen bilden. In dem dargestellten Ausführungsbeispiel bildet das Befestigungsteil 30 einen Steg, an dessen Unterkante das Rastelement 31 in Form einer Spannhülse angebracht ist.

Die U-förmigen Führungsgehäuse 20 werden an den Tragplatten 5 in der Weise angeordnet, daß nur ein geringer seitlicher Abstand zwischen den Einführungsgliedern 24 benachbarter Führungsgehäuse 20 besteht. Auf diese Weise wird durch die Einführungsglieder 24 die richtige Einführung der Lackdose 41 in das jeweilige Führungsgehäuse 20 sichergestellt, wobei die korrekte Positionierung durch die Anschläge 29 und das Rastelement 31 gewährleistet wird.

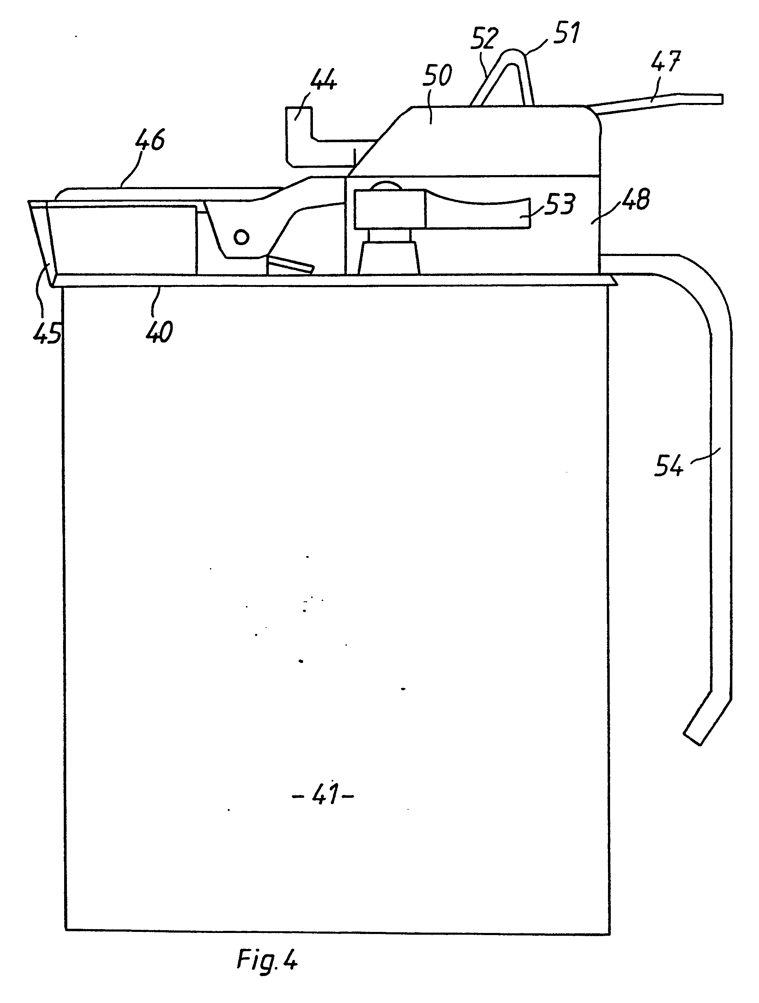

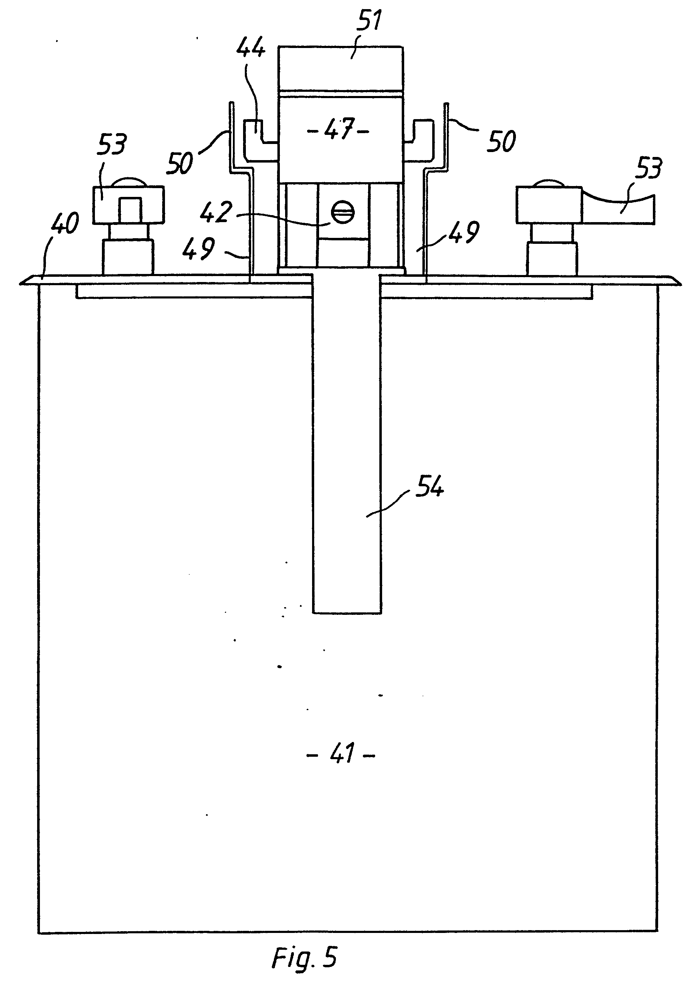

In Fig. 4 und 5 sind ein Deckel 40 und eine Lackdose 41 in verschiedenen Ansichten dargestellt. In diesem Deckel 40 ist in üblicher Weise eine Rührerwelle 42 drehbar gelagert, die an der Innenseite des Deckels 40 ein nicht dargestelltes Rührwerk und an der Außenseite des Deckels 40 ein zweites Antriebsglied 44 trägt. Der Deckel 40 ist mit einer Ausgießöffnung 45 versehen, die durch ein Verschlußglied 46, das mit einem federbelasteten Öffnungshebel 47 betätigbar ist, verschlossen ist. An dem Deckel 40 ist ferner ein von seiner Außenseite aufragendes, allgemein U-förmiges Führungsglied 45 angeordnet, das mit seiner Basis an dem Deckel 40 befestigt ist und dessen Schenkel 49 jeweils an den Enden seitlich versetzte Führungselemente 50 bilden. Die Führungselemente 50 an dem Deckel 40 sind so ausgebildet und angeordnet, daß sie an den Seitenwänden 22 und den Anschlägen 29 der U-förmigen Führungsgehäuse 20 zur Anlage kommen. Von dem Öffnungshebel 47 steht ein Rastglied 51 nach oben vor und bildet an der dem zweiten Antriebsglied 44 zugekehrten Seite eine Schrägfläche 52. Das Rastglied 51 ist so bemessen und angeordnet, daß es mit dem Rastelement 31 an dem Führungsgehäuse 20 zusammenwirkt. Schließlich ist der Deckel 40 mit konventionell ausgebildeten Kegelflächen und Klemmgliedern 53 zum abdichtenden Verschluß der Lackdose 41 und mit einem Handgriff 54 versehen.

Zum Einsetzen der Lackdose 41 in das Regal wird die Lackdose 41 mittels des Handgriffs 54 so in das Führungsgehäuse 20 eingeschoben, daß die Führungselemente 50 an den Seitenwänden 22 zur Anlage kommen. Die Lackdose 41 ist dann an der betreffenden Tragplatte 5 positioniert, ohne daß zunächst eine Antriebsverbindung zur Rührerwelle 42 besteht. Dazu muß das Rastglied 51 erst mit seiner Schrägfläche 52 an dem Rastelement 31 vorbeibewegt werden, was dadurch möglich ist, daß der federbelastete Öffnungshebel 47 kurzfristig gegen die Kraft seiner Feder geöffnet wird. Die Lackdose 41 wird dann so weit in das Führungsgehäuse 20 eingeschoben, daß die Vorderkanten der Führungselemente 50 an der Lackdose 41 an den Anschlägen 29 des Führungsgehäuses 20 anliegen. Die ersten und zweiten Antriebsglieder 11 und 44 werden dadurch in Antriebsverbindung gebracht. Diese Verbindung ist nicht ohne weiteres wieder zu lösen, da das Rastglied 51 und das Rastelement 31 dem entgegenstehen. Es wird daher auf diese Weise eine sichere und genau reproduzierbare Positionierung der Lackdose 41 an der Tragplatte 5 hergestellt. Die Antriebsverbindung kann dadurch wieder gelöst werden, daß der Öffnungshebel 47 gegen die Kraft seiner Feder geöffnet wird, wodurch die Lackdose 41 aus dem Führungsgehäuse 20 herausgezogen und das Rastglied 51 außer Rasteingriff mit dem Rastelement 31 gebracht werden kann.

Bei dem Regal befinden sich die Antriebsglieder 11, 44 im eingebauten Zustand der Lackdose 41 zwischen den Seitenwänden 22 des U-förmigen Führungsgehäuses 20 und den Führungselementen 50 des Führungsglieds 48 am Deckel 40 der Lackdose 41. Zusätzlich sind die Antriebsglieder 11, 44 zwischen der Basis 23 und der Schutzwand 28 des U-förmigen Führungsgehäuses 20 eingeschlossen, das dicht an der Tragplatte 5 angeordnet ist. Die Antriebsglieder sind dadurch gegen Eingriffe von außen geschützt, und es wird eine besonders hohe Arbeitssicherheit erreicht, da die umlaufenden Antriebsglieder 11 und 44 während des Betriebs praktisch unzugänglich sind.

**Patentansprüche**

1. Regal zur Aufnahme von Lackdosen, bestehend aus seitlichen, vertikalen Trägern (1, 2), zwischen den Trägern (1, 2) in unterschiedlichen vertikalen Abständen verlaufenden Tragplatten (5), einer Antriebseinrichtung mit einem Antriebsmotor und einer Antriebsübertragung an jeder Tragplatte (5) zu einer Reihe von ersten Antriebsgliedern (11) an einer Seite jeder Tragplatte (5), deren jedes zum Eingriff mit einem zweiten Antriebsglied (44) an einer Lackdose (41) ausgebildet ist, und Halterungen für jeweils eine Lackdose an den Tragplatten (5),

dadurch gekennzeichnet, daß die Halterungen an der Seite der Tragplatte (5), von der die ersten Antriebsglieder (11) vorstehen, allgemein U-förmige Führungsgehäuse (20) für jeweils eine Lackdose (41) bilden, deren jedes das erste Antriebsglied (11) einschließt, und daß das U-förmige Führungsgehäuse (20) ein Rastelement (31) enthält, das sich an einer von der Basis (23) abgekehrten Seite zwischen den Seitenwänden (22) des U-förmigen Führungsgehäuses (20) erstreckt.

2. Regal nach Anspruch 1, dadurch gekennzeichnet, daß sich zwischen den Seitenwänden (22) des Führungsgehäuses (20) eine der Basis (23) des U-förmigen Führungsgehäuses (20) gegenüberliegende Schutzwand (28) erstreckt und daß das erste Antriebsglied (11) zwischen der Basis (23) und der Schutzwand (28) eingeschlossen ist.

3. Regal nach Anspruch 1 oder 2, dadurch gekennzeichnet, daß die Basis (23) und die Schutzwand (28) halbkreisförmig ausgebildet und so angeordnet sind, daß sie sich zu einem Kreis ergänzen.

4. Regal nach einem der Ansprüche 1 bis 3, dadurch gekennzeichnet, daß das U-förmige Führungsgehäuse (20) mit einem Führungsteil ausgebildet ist.

5. Regal nach Anspruch 4, dadurch gekennzeichnet, daß das Führungsteil eine von der Basis (23) des U-förmigen Führungsgehäuses (20) ausgehende, in einem Abstand von den der Tragplatte (5) abgekehrten Kanten der Seitenwände (22) des U-förmigen Führungsgehäuses (20) verlaufende Führungsplatte (26) mit einem zur Basis des U-förmigen Führungsgehäuses (20) gerichteten Führungsschlitz (27) enthält.

6. Regal nach Anspruch 5, dadurch gekennzeichnet, daß die Führungsplatte (26) seitlich unter Ausbildung von Anschlägen (29) mit der Basis (23) des U-förmigen Führungsgehäuses (20) verbunden ist.

7. Regal nach Anspruch 1, dadurch gekennzeichnet, daß das Rastelement (31) an einem Befestigungsteil (30) für das Führungsgehäuse (20) angeordnet ist.

8. Regal nach einem der Ansprüche 1 bis 7, dadurch gekennzeichnet, daß das U-förmige Führungsgehäuse (20) mit Einführungsgliedern (24) versehen ist, die von den freien Enden der Seitenwände (22) abgewinkelt sind.

9. Regal nach Anspruch 8, dadurch gekennzeichnet, daß die einander zugekehrten Einführungsglieder (24) benachbarter Führungsgehäuse (20) in einem geringen seitlichen Abstand voneinander angeordnet sind.

10. Lackdose zur Aufnahme in einem Regal nach einem der Ansprüche 1 bis 9, mit einem Deckel (40), in dem eine Rührerwelle gelagert ist, die auf der Innenseite des Deckels (40) ein Rührwerk und auf der Außenseite des Deckels (40) ein zweites Antriebsglied (44) trägt, mit einem Verschlußglied (46) für eine Ausgießöffnung (45) und einem gegen die Kraft einer Feder im öffnenden Sinne betätigbaren Öffnungshebel (47) für das Verschlußglied (46),

dadurch gekennzeichnet, daß ein allgemein U-förmiges, von der Außenseite des Deckels (40) aufragendes Führungsglied (48) vorgesehen und an dem Öffnungshebel (47) eine Rastvorrichtung angeordnet ist, und

daß die Basis des U-förmigen Führungsglieds (48) an dem Deckel (40) angeordnet ist und daß die Schenkel (49) des U-förmigen Führungsglieds (48) Führungselemente (50) bilden, die zur Zusammenwirkung mit dem Führungsgehäuse (20) bestimmt sind.

11. Lackdose nach Anspruch 10, dadurch gekennzeichnet, daß die Rastvorrichtung an der dem Deckel (40) abgewandten Seite des Öffnungshebels (47) angeordnet und zur Zusammenwirkung mit dem Rastelement (31) eines Führungsgehäuses (20) bestimmt ist.

12. Lackdose nach Anspruch 11, dadurch gekennzeichnet, daß die Rastvorrichtung ein von der dem Deckel (40) abgewandten Seite des Öffnungshebels (47) aufragendes Rastglied (51) bildet.

13. Lackdose nach Anspruch 12, dadurch gekennzeichnet, daß das Rastglied (51) mit einer dem zweiten Antriebsglied (44) zugekehrten Schrägfläche (52) versehen ist.

**Claims**

1. Shelf for accommodtion of lacquer cases, consisting of lateral vertical supports (1, 2), supporting plates (5) extending between the supports (1, 2) at different vertical distances, a driving arrangement having a driving motor and a driving transmission on each supporting plate (5) forming a row of first driving members (11) on one side of each supporting plate (5), each of which being adapted to mesh with a second driving member (44) on a lacquer case (41), and holders for a lacquer case each on the supporting plates (5),

characterized in that the holders on the side of the supporting plates (5), from which the first driving members (11) project, form generally U-shaped guiding housings (20) for a lacquer case (41) each, each of which enclosing the first driving member (11), and in that the U-shaped guiding housing (20) comprises a locking element (31), which extends on a side remote from the base (23) between the side walls (22) of the U-shaped guiding housing (20).

2. Shelf as set forth in claim 1, characterized in that a protection wall (28) opposite the base (23) of the U-shaped guiding housing (20) extends between the side walls (22) of the guiding housing (20), and in that the first driving member (11) is enclosed between the base (23) and the protection wall (28).

3. Shelf as set forth in claim 1 or 2, characterized in that the base (23) and the protection wall (28) are formed semicircularly and arranged such, that they complement each other to a circle.

4. Shelf as set forth in anyone of the claims 1 to 3, characterized in that the U-shaped guiding housing (20) has a guiding portion.

5. Shelf as set forth in claim 4, characterized in that the guiding portion comprises a guiding plate (26) having a guiding slot (27) directed to the base of the U-shaped guiding housing (20), which guiding plate (26) starts from the base (23) of the U-shaped guiding housing (20) and extends at a distance from the edges of the side walls (22) of the U-shaped guiding housing (20) remote from the supporting plate (5).

6. Shelf as set forth in claim 5, characterized in that the guiding plate (26) is connected laterally to the base (23) of the U-shaped guiding housing (20) thereby forming stops (29).

7. Shelf as set forth in claim 1, characterized in that the locking element (31) is arranged at an attachment portion (30) for the guiding housing (20).

8. Shelf as set forth in anyone of the claims 1 to 7, characterized in that the U-shaped guiding housing (20) is provided with entering members (24), which are bent off from the free ends of the side walls (22).

9. Shelf as set forth in claim 8, characterized in that the entering members (24) facing each other of adjacent guiding housings (20) are arranged at a small lateral distance from each other.

10. Lacquer case for accommodation in a shelf as set forth in anyone of the claims 1 to 9, having a top cover (40), in which the mixer shaft is mounted, which carries a mixer action on the inside of the top cover (40) and a second driving member (44) on the outside of the top cover (40), and having a closing member (46) for a spout opening (45) and an opening lever (47) for the closure member (46) aand arranged to be actuated in opening sense against the force of a spring,

characterized in that a generally U-shaped guiding member (48) rising from the outside of the top cover (40) is provided and a locking divice is arranged at the opening lever (47), and

in that the base of the U-shaped guiding member (48) is arranged at the top cover (40) and in that the legs (49) of the U-shaped guiding member (48) form guiding elements (50), which are intended for cooperation with the guiding housing (20).

11. Lacquer case as set forth in claim 10, characterized in that the locking device is arranged on the side of the opening lever (47) remote from the top cover (40) and intended for cooperation with the locking element (31) of a guiding housing (20).

12. Lacquer case as set forth in claim 11, characterized in that the locking device forms a locking member (51) rising from the side of the opening lever (47) remote from the top cover (40).

13. Lacquer case as set forth in claim 12, characterized in that the locking member (51) is provided with an inclined surface (52) facing the second driving member (44).

## Revendications

1. Rayons destinés à recevoir des boîtes de laque, constitués de supports (1, 2) latéraux verticaux, de plaques portrices (5) s'étendant entre les supports (1, 2) à des écarts verticaux différents, d'un dispositif d'actionnement ayant un moteur d'actionnement et une transmission d'actionnement sur chaque plaque portrice (5), formant une série de premiers éléments d'actionnement (11) sur un côté de chaque plaque portrice (5), dont chacune est concue de sorte à s'engrener dans un deuxième élément d'actionnement (44) sur une boîte de laque (41), et de fixations pour respectivement une boîte de laque sur les plaques portrices (5),

caractérisés par le fait que les fixations sur le côté de la plaque portrice (5) depuis laquelle saillent les premiers éléments d'actionnement (11), forment des boîtiers de guidage (20) généralement en forme d'U pour respectivement une boîte de laque (41), et dont chacun inclue le premier élément d'actionnement (11), et par le fait que le boîtier de guidage (20) en forme d'U comprend un élément d'encliquetage (31) s'étendant sur un côté opposé à la base (23) entre les parois latérales (22) du boîtier de guidage (20) en forme d'U.

2. Rayons selon la revendication 1, caractérisés par le fait qu'une paroi de protection (28) opposée à la base (23) du boîtier de guidage (20) en farme d'U s'étend entre les parais latérales (22) du boîtier de guidage (20), et que le premier élément d'actionnement (11) est enfermé entre la base (23) et la paroi de protection (28).

3. Rayons selon la revendication 1 ou 2, caractérisés par le fait que la base (23) et la paroi de protection (28) sont formées de manière semi-circulaire et sont disposées de sorte qu'elles se complètent à un cercle.

4. Rayons selon l'une quelconque des revendications 1 à 3, caractérisés par le fait que le boîtier de guidage (20) en forme d'U est formé d'un membre de guidage.

5. Rayons selon la revendication 4, caractérisés par le fait que le membre de guidage comprend une plaque de guidage (26) partant de la base (23) du boîtier de guidage (20) en forme d'U et s'étendant avec écart des arêtes, opposées à la plaque portrice (5), des parois latérales (22) du boîtier de guidage (20) en forme d'U, et ayant une fente de guidage (27) dirigée vers la base du boîtier de guidage (20) en forme d'U.

6. Rayons selon la revendication 5, caractérisés par le fait que la plaque de guidage (26) est latéralement reliée à la base (23) du boîtier de guidage (20) en forme d'U, tout en formant des butées (29).

7. Rayons selon la revendication 1, caractérisés par le fait que l'élément d'encliquetage (31) est disposé sur un élément de fixation (30) pour le boîtier de guidage (20).

8. Rayons selon l'une quelconque des revendications 1 à 7, caractérisés par le fait que le boîtier de guidage (20) en forme d'U est pourvu d'éléments d'introduction (24) caudés des extrémités libres des parois latérales (22).

9. Rayans selon la revendication 8, caractérisés par le fait que les éléments d'introduction (24), en face l'un de l'autre, de boîtier de guidage (20) avoisinant sont disposés à faible écart latéral l'un de l'autre.

10. Boîte de laque déstinée à être recue dans des rayons selon l'une des revendications 1 à 9, ayant un couvercle (40) dans lequel est monté un arbre agitateur qui parte sur le côté intérieur du cauvercle (40) un agitateur et sur le côté extérieur du couvercle (40) un deuxième élément d'actionnement (44) ayant un élément de fermeture (46) pour une ouverture de décharge (45) et un levier d'ouverture (47) pour l'élément de fermeture (46), actionnable contre la force d'un ressort dans le sens d'ouverture,

caractérisé par le fait qu'un membre de guidage (48) en forme d'U est prévu, saillant vers le haut du côté extérieur du couvercle (40), et qu'un dispositif d'encliquetage est disposé sur le levier d'ouverture (47), et

que la base du membre de guidage (48) en forme d'U est disposée sur le couvercle (40) et que les jambes (49) du membre de guidage (48) en forme d'U forment des éléments de guidage (50) déstinés à coopérer avec le boîtier de guidage (20).

11. Boîte de laque selon la revendication 10, caractérisée par le fait que le dispositif d'encliquetage est disposée sur le côté du levier d'ouverture (47) opposé au couvercle (40) et est déstiné à coopérer avec l'élément d'encliquetage (31) d'un boîtier de guidage (20).

12. Boîte de laque selon la revendication 11, caractérisée par le fait que le dispositif d'encliquetage forme un membre d'encliquetage (51) saillant vers le haut du côté du levier d'ouverture (47) opposé au couvercle (40).

13. Boîte de laque selon la revendication 12, caractérisée par le fait que le membre d'encliquetage (51) est pourvu d'une surface inclinée (52) en face du deuxième élément d'actionnement (44).

4
11
20
41
2
1
5
6
10
11
20
41
3

20
23
26
29
29
27
28
22
22
31
30
24
24

Fig. 2

30
- 24 -
- 24 -
31
26

Fig. 3

52
51
47
44
50
46
53
48
45
40
54
-41-

Fig. 4

51
44
-47-
50
50
53
53
42
40
49
49
54
-41-

Fig. 5